# EUROPÄISCHE PATENTSCHRIFT

(11) **EP 1 904 723 B1**
(45) Veröffentlichungstag und Bekanntmachung des Hinweises auf die Patenterteilung: **13.05.2009**
(21) Anmeldenummer: 06755251.3
(22) Anmeldetag: 18.05.2006
(51) Int. Cl.: F01N 3/20, F02M 59/10, B01D 53/94, F02B 71/00, F04B 17/05, F04B 19/00, C01C 1/02

(54) **AMMONIAKERZEUGER, FAHRZEUG UND VERFAHREN ZUR ERZEUGUNG VON AMMONIAK**
AMMONIA GENERATOR, VEHICLE AND METHOD FOR GENERATING AMMONIA
GENERATEUR D'AMMONIAC, VEHICULE, ET PROCEDE DE PRODUCTION D'AMMONIAC

(30) Priorität: 14.07.2005 DE 102005032843
(43) Veröffentlichungstag der Anmeldung: 02.04.2008
(73) Patentinhaber: ROBERT BOSCH GMBH, 70442 Stuttgart (DE)
(72) Erfinder: DUERNHOLZ, Manfred, 71720 Oberstenfeld (DE); HERNIER, Markus, 70839 Gerlingen (DE)
(86) Internationale Anmeldenummer: PCT/EP2006/062417
(87) Internationale Veröffentlichungsnummer: WO 2007/006602

(56) Entgegenhaltungen:
- WO-A-20/04022936
- DE-A1- 10 147 389
- DE-A1- 10 337 901
- DE-A1- 10 345 808
- DE-A1- 19 922 960
- US-A1- 2001 002 244

## Beschreibung

Die Erfindung betrifft einen Ammoniakerzeuger, insbesondere für mobile Anwendungen, sowie ein Verfahren zur Erzeugung von Ammoniak gemäß der Gattung der unabhängigen Ansprüche.

### Stand der Technik

Aus der DE 103 45 808 A1 der Anmelderin ist es bei einem Fahrzeug der eingangs genannten Art bereits bekannt, bei der Abgasbehandlung von sauerstoffreichen Benzin- und Dieselabgasen einer Verbrennungskraftmaschine des Fahrzeugs zur Beseitigung von Stickoxiden das sogenannte SCR(Selective Catalytic Reduktion)-Verfahren einzusetzen, bei dem die Stickoxide (NOₓ) im Abgas in einem SCR-Katalysator nach vorheriger Zufuhr von Ammoniak (NH₃) mit hoher Selektivität zu Stickstoff (N₂) reduziert werden. Das für das SCR-Verfahren benötigte Ammoniak wird dort in einer an Bord des Fahrzeugs mitgeführten Ammoniakeinheit beispielsweise nach dem Haber-Bosch-Verfahren unter einem Druck von mehr als 100 bar aus Stickstoff und Wasserstoff erzeugt.

Weiter ist es aus der DE 199 22 960 A1 bereits bekannt, das in einer Abgasreinigungsanlage einer Verbrennungskraftmaschine zur Reduktion von Stickoxiden nach dem SCR-Verfahren benötigte Ammoniak an Bord in einem Ammoniakerzeugungskatalysator aus Verbrennungsabgasen der Verbrennungskraftmaschine zu erzeugen, deren Zylinder dazu wenigstens zeitweilig bzw. zum Teil mit einem fetten Kraftstoff-Luft-Gemisch beaufschlagt werden, so dass das aus der Verbrennungskraftmaschine emittierte Abgas neben unverbrannten Kohlenwasserstoffen auch Wasserstoff und eine gewisse Menge Stickoxide enthält. Aus den beiden letzteren wird dann im Ammoniakerzeugungskatalysator Ammoniak erzeugt. Die Ammoniakerzeugung aus Abgasen der Verbrennungskraftmaschine hat jedoch den Nachteil, dass die Verbrennungskraftmaschine zumindest während der zeitweiligen Beaufschlagung mit einem fetten Kraftstoff-Luft-Gemisch weder im Hinblick auf ihren Kraftstoffverbrauch noch auf die Fahreigenschaften des Fahrzeugs optimal eingestellt werden kann.

Die US 2001/002244 beschreibt ein Verfahren der selektiven katalytischen Reduktion, bei dem das Reduktionsmittel Ammoniak mittels einer elektrischen Gasentladung erzeugt wird.

### Vorteile der Erfindung

Der erfindungsgemäße Ammoniakerzeuger und das erfindungsgemäße Verfahren bieten demgegenüber die Vorteile, dass der Wirkungsgrad der Ammoniakerzeugung im Vergleich zu einer Erzeugung aus Abgasen einer als Antriebsmotor für das Fahrzeug dienenden Verbrennungskraftmaschine verbessert werden kann, dass durch die Entkopplung der Ammoniakerzeugung und des Betriebs der Verbrennungskraftmaschine als Fahrzeugantriebsmotor eine Beeinträchtigung der Fahreigenschaften des Fahrzeugs und eine Erhöhung des Kraftstoffverbrauchs vermieden werden kann, und dass die einen Teil des Ammoniakerzeugers bildende Freikolbenmaschine außerdem als "Auxiliary Power Unit" APU im Fahrzeug eingesetzt werden kann, vorzugsweise zur Erzeugung von hydraulisch nutzbarer Energie, zum Beispiel für eine Hochdruckeinspritzanlage des Fahrzeugs.

Eine bevorzugte Ausgestaltung der Erfindung sieht vor, dass das Abgas des Freikolbenmotors zur Synthese des Ammoniaks durch einen Katalysator geleitet wird, vorzugsweise einen Edelmetall-Ammoniakkatalysator, wobei zuvor ggf. zusätzlich Kraftstoff in das Abgas zugesetzt wird, um seinen Gehalt an unverbrannten Kohlenwasserstoffen zu erhöhen, aus denen im Katalysator katalytisch Wasserstoff abgespalten und zur katalytischen Synthese von Ammoniak verwendet wird. Des weiteren wird mit Hilfe der unverbrannten Kohlenwasserstoffe für die im Katalysator stattfindende Ammoniaksynthese hinderlicher Sauerstoff reaktiv entfernt.

Gemäß einer weiteren bevorzugten Ausgestaltung der Erfindung ist der Ammoniakkatalysator mit einem Abgasstrang der als Fahrzeugantrieb dienenden Verbrennungskraftmaschine verbunden, und zwar vor einem SCR-Katalysator, in dem die im Abgas der Verbrennungskraftmaschine und der Freikolbenmaschine enthaltenen Stickoxide mit dem zuvor synthetisierten Ammoniak mit hoher Selektivität katalytisch zu Stickstoff reduziert werden.

Wie bereits angegeben, kann die Freikolbenmaschine nicht nur als Teil eines Ammoniakerzeugers zur Gewinnung von Ammoniak verwendet werden, sondern kann gleichzeitig mit Vorteil auch als "Auxiliary Power Unit" (APU) des Fahrzeugs genutzt werden, zum Beispiel um den Druck eines in die Verbrennungskraftmaschine eingespritzten Kraftstoffs zu erhöhen, um eine Servolenkung des Fahrzeugs mit dem benötigten Hochdrucköl zu versorgen oder für eine hydraulische Bremskraftverstärkung bei schweren Nutzfahrzeugen.

Zur Erhöhung des Kraftstoffdrucks mit Hilfe der Freikolbenmaschine wird der Kraftstoff zweckmäßig in einer ersten Druckerhöhungsstufe direkt in einen Arbeitszylinder der Freikolbenmaschine zugeführt und dann mit Hilfe eines nachgeschalteten Druckübersetzers mit weiteren Übersetzungsstufen auf das gewünschte Druckniveau zwischen 300 und 2000 bar verstärkt.

### Zeichnung

Die Erfindung wird nachfolgend in einem Ausführungsbeispiel anhand der zugehörigen Zeichnung näher erläutert. Es zeigen:
- Fig. 1: eine schematische Darstellung des Funktionsprinzips einer Freikolbenmaschine;
- Fig. 2: eine schematische Darstellung eines Kraftfahrzeugs mit einer Verbrennungskraftmaschine und einer Freikolbenmaschine, die einen Teil eines Ammoniakerzeugers und einen Druckerzeuger bildet.

### Beschreibung des Ausführungsbeispiels

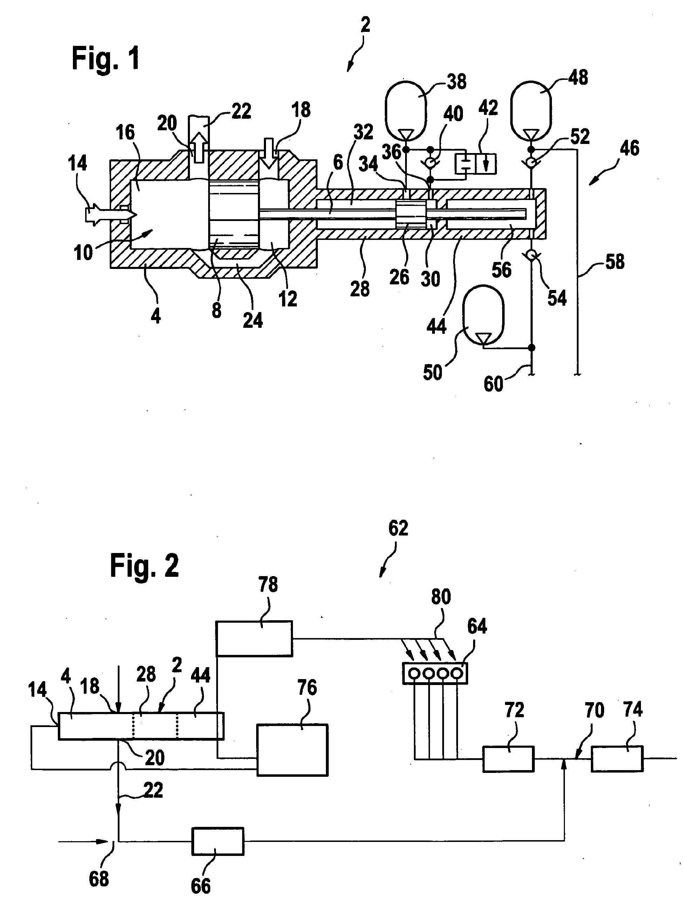

Die in Fig. 1 dargestellte, im Zweitaktverfahren arbeitende Freikolbenmaschine 2 weist in an sich bekannter Weise einen Zylinder 4 auf, in dem ein am Ende einer Kolbenstange 6 angebrachter Freikolben 8 frei beweglich ist. Der Freikolben 8 unterteilt einen vom Zylinder 4 umschlossenen Zylinderraum 10 in zwei Räume, einen Frischluftraum 12 auf der Seite der Kolbenstange 6 und einem an einem Stirnende mit einer Einspritzdüse 14 versehenen Brennraum 16 auf der entgegengesetzten Seite des Freikolbens 8. Wenn sich der Freikolben 8 in der Nähe seines in Fig. 1 dargestellten "unteren" Totpunkts befindet, sind die beiden Räume 12 und 16 über einen Lufteinlass 18 mit der Umgebung bzw. über einen Auspuff 20 mit einer Abgasleitung 22 verbunden und kommunizieren untereinander nach dm motorischen Zweitaktprinzip beispielsweise durch seitliche Luftschlitze 24 (nur einer dargestellt).

Auf der Kolbenstange 6 ist ein weiterer Kolben 26 mit kleinerem Querschnitt fest montiert, der in einem auf der Seite des Frischluftraums 12 an den Zylinder 4 angrenzenden Kompressions- bzw. Rückholzylinder 28 beweglich ist. Der Kompressions- bzw. Rückholzylinder 28 wird durch den Kolben 26 in einen Kompressionsraum 30 und einen Rückholraum 32 unterteilt, von denen der erstere durch zwei Bohrungen 34, 36 mit einem Kompressionsspeicher 38 verbindbar ist. Die zum Stirnende des Kompressionsraums 30 benachbarte Bohrung 36 weist einen kleinen Durchmesser auf und ist mit dem Kompressionsspeicher 38 über ein Rückschlagventil 40 sowie über ein Regelventil 42 verbunden, während die andere Bohrung 34 einen größeren Durchmesser besitzt und direkt mit dem Kompressionsspeicher 38 verbunden ist, jedoch in der Nähe des in Fig. 1 dargestellten "unteren" Totpunkts des Freikolbens 8 durch den Kolben 26 verschlossen ist.

Aus dem Kompressions- bzw. Rückholzylinder 28 erstreckt sich die Kolbenstange 6 weiter in einen Arbeitszylinder 44, der einen Teil eines von einem inkompressiblen Hydraulikfluid durchströmten Hydraulikkreises 46 bildet, in dem der Druck des Hydraulikfluids mittels der Freikolbenmaschine 2 erhöht werden soll. Der Hydraulikkreis 46 umfasst einen Hochdruckarbeitsspeicher 48 auf der Hochdruckseite des Arbeitszylinders 44 und einen Niederdruckarbeitsspeicher 50 auf der Niederdruckseite des Arbeitszylinders 44, die jeweils über ein Rückschlagventil 52 bzw. 54 so mit einem vom Arbeitszylinder 44 umschlossenen Arbeitsraum 56 verbunden sind, dass das Hydraulikfluid aus dem Niederdruckarbeitsspeicher 50 in den Arbeitsraum 56 angesaugt und von dort unter Druck in den Hochdruckarbeitsspeicher 48 ausgestoßen wird. Der Hydraulikreis 46 umfasst weiter einen über eine Hochdruckleitung 58 mit dem Hochdruckarbeitsspeicher 48 bzw. der Hochdruckseite des Arbeitszylinders 44 verbundenen Verbraucher, sowie eine Rückführleitung 60 vom Verbraucher zum Niederdruckarbeitsspeicher 50.

Beim Betrieb der Freikolbenmaschine 2 strömt in der in Fig. 1 dargestellten Ausgangsstellung im "unteren" Totpunkt des Freikolbens 8 ein im Kompressionsspeicher 38 gespeichertes, unter Druck stehendes Fluid über das Regelventil 42 und die Bohrung 36 langsam in den Kompressionsraum 30, woraufhin sich der Kolben 26 und damit auch die Kolbenstange 6 und der Freikolben 8 zu Beginn eines "Ansaug- und Verdichtungshubs" allmählich in Richtung Brennraum 16 bewegen. Dabei wird zuerst durch den Lufteinlass 18 Frischluft in den Frischluftraum 12 angesaugt und Abgas aus dem Brennraum 16 durch den Auspuff 20 in die Abgasleitung 22 ausgestoßen. Sobald der Freikolben 8 den Lufteinlass 18, die brennraumseitigen Auslässe der Luftschlitze 24 und den Auspuff 20 verschließt, gibt der Kolben 26 die zweite Bohrung 34 frei, wodurch sich der Kompressionsspeicher 38 schlagartig in den Kompressionsraum 30 entleert. Dadurch wird der Kolben 26 und damit auch der Freikolben 8 in Richtung Einspritzdüse 14 beschleunigt und die Luft im Brennraum 16 schnell verdichtet, wodurch sie sich stark aufheizt. Kurz bevor der Freikolben 8 seinen "oberen" Totpunkt in der Nähe der Einspritzdüse 14 erreicht, wird durch diese letztere Kraftstoff in den Brennraum 16 eingespritzt. Der Kraftstoff wird zerstäubt, teilweise verdampft und entzündet sich, wodurch sich der Freikolben 8 während seines anschließenden "Arbeitshubs" wieder in Richtung des "unteren" Totpunkts (Fig. 1) zurück bewegt. Kurz vor Erreichen des "unteren" Totpunkts wird verdichtete Luft aus dem Frischluftraum 12 über die Luftschlitze 24 in den Brennraum 16 gedrückt und dieser gespült, wobei das Abgas durch den Auspuff 20 in die Abgasleitung 22 entweicht.

Im Bereich des Kompressionszylinders 28 wird während des Arbeitshubs der Kompressionsspeicher 38 zuerst über beide Bohrungen 34, 36 und dann über die Bohrung 36 und das Rückschlagventil 40 wieder aufgeladen, während im Bereich des Arbeitszylinders 44 von der Kolbenstange 6 Hydraulikfluid aus dem Arbeitsraum 56 in den Hochdruckarbeitsspeicher 48 verdrängt wird, das während des vorangehenden "Ansaug- und Verdichtungshubs" aus dem Niederdruckarbeitsspeicher 50 in den Arbeitsraum 56 angesaugt worden ist.

Es hat sich gezeigt, dass durch eine geeignete Wahl des Betriebspunkts der Freikolbenmaschine 2, unter anderem durch geeignete Einstellung des Kraftstoff-Luft-Verhältnisses im Brennraum 16, das bei der Verbrennung erzeugte Abgas mit gutem Wirkungsgrad zur Gewinnung von Ammoniak genutzt werden kann, da es möglich ist, Freikolbenmaschinen sehr gezielt in einem oder einigen wenigen Betriebspunkten im Hinblick auf die Erzeugung von Ammoniak zu optimieren.

Fig. 2 zeigt schematisch ein Kraftfahrzeug 62 mit einem als Verbrennungskraftmaschine 64 ausgebildeten Antriebsmotor, bei dem die Freikolbenmaschine 2 zum einen als Vorstufe zur Erzeugung von Ammoniak als Reduktionsmittel für die im Abgas der Verbrennungsmaschine 64 enthaltenen Stickoxide und damit zur Emissionsminderung dient und zum anderen als "Auxiliary Power Unit" (APU) eingesetzt wird, um den für eine Hochdruck-Kraftstoffeinspritzung in die Verbrennungsmaschine 64 benötigten Druck zu liefern.

Zur Erzeugung von Ammoniak wird das Abgas aus dem Brennraum 16 der Freikolbenmaschine 2 durch die Abgasleitung 22 einem als Ammoniak-Edelmetallkatalysator 66 ausgebildeten Oxidationskatalysator zugeführt. Im Ammoniak-Edelmetallkatalysator 66 wird ein Teil der im Abgas enthaltenen Kohlenwasserstoffe katalytisch unter Abspaltung von Wasserstoff zersetzt und dieser zur katalytischen Synthese von Ammoniak aus im Abgas enthaltenen stickstoffhaltigen Molekülen, wie Luftstickstoff oder Stickoxiden genutzt. Um den Gehalt der zur Synthese von Ammoniak benötigten unverbrannten Kohlenwasserstoffe im Abgas zu erhöhen, kann vor dem Katalysator 66 bei 68 noch eine Kraftstoffnacheinspritzung in das Abgas erfolgen.

Der Auslass des Ammoniak-Katalysators 66 ist mit einem Abgasstrang 70 der Verbrennungskraftmaschine 64 verbunden, der neben einem Oxidationskatalysator 72 und ggf. einem Partikelfilter (nicht dargestellt) einen SCR-Katalysator 74 umfasst, in dem die im Abgas der Verbrennungskraftmaschine 64 und im Abgas der Freikolbenmaschine 2 enthaltenen Stickoxide mit Hilfe des im Katalysator 66 synthetisierten, vor dem SCR-Katalysator 74 in den Abgasstrang 70 zugeführten Ammoniaks mit hoher Selektivität zu Stickstoff reduziert werden, um die Stickoxidemissionen des Kraftfahrzeugs 62 zu verringern.

Zur Bereitstellung des für die Hochdruck-Kraftstoffeinspritzung in die Verbrennungsmaschine 64 benötigten Kraftstoffdrucks wird dem Arbeitszylinder 44 der Freikolbenmaschine 2 als Hydraulikfluid Kraftstoff zugeführt, dessen Druck im Arbeitszylinder 44 erhöht wird. Dazu ist die Niederdruckseite des Arbeitszylinders 44 direkt mit dem Kraftstofftank 76 des Kraftfahrzeugs 62 verbunden, der sowohl den Kraftstoff für den Betrieb der Verbrennungsmaschine 64 und für den Betrieb der Freikolbenmaschine 2 enthält und dem Niederdruckarbeitsspeicher 50 in Fig. 1 entspricht. Die Hochdruckseite des Arbeitszylinders 44 ist mit einem Druckübersetzer 78 verbunden, der eine Mehrzahl von Druckübersetzungsstufen (nicht dargestellt) umfasst, mit deren Hilfe der im Arbeitszylinder 44 erhöhte Kraftstoffdruck auf ein gewünschtes Niveau zwischen 300 und 2000 bar verstärkt werden kann, bevor der Kraftstoff aus dem Druckübersetzer 78 in eine Kraftstoffeinspritzanlage 80 der Verbrennungskraftmaschine 64 zugeführt wird.

## Patentansprüche

1. Ammoniakerzeuger für ein Fahrzeug mit einer Verbrennungskraftmaschine (64) und einem SCR-Katalysator (74) in einem Abgasstrang (70) der Verbrennungskraftmaschine (64), mit Einrichtungen (2, 66, 68) zur Erzeugung von Ammoniak aus einem Abgas eines Verbrennungsvorgangs zur Verwendung als Reduktionsmittel für die im Abgas der Verbrennungskraftmaschine (64) enthaltenen Stickoxide, **dadurch gekennzeichnet, dass** die Einrichtungen (2, 66, 68) eine mit Kraftstoff betriebene Freikolbenmaschine (2) umfassen, aus deren Abgas das Ammoniak erzeugt wird, wobei die Freikolbenmaschine (2) den Druck eines in die Verbrennungskraftmaschine (64) eingespritzten Kraftstoffs erhöht.

2. Ammoniakerzeuger, nach Anspruch 1, **dadurch gekennzeichnet, dass** er einen vom Abgas der Freikolbenmaschine (2) durchströmbaren Katalysator (66) umfasst.

3. Ammoniakerzeuger nach Anspruch 2, **dadurch gekennzeichnet, dass** der Katalysator ein Edelmetall-Ammoniakkatalysator (66) ist.

4. Ammoniakerzeuger nach Anspruch 2 oder 3, **dadurch gekennzeichnet, dass** eine Einrichtung (68) zur Einspritzung von Kraftstoff in das Abgas der Freikolbenmaschine (2) vor seinem Hindurchtritt durch den Katalysator (66) vorgesehen ist.

5. Ammoniakerzeuger nach Anspruch 2, 3 oder 4, **dadurch gekennzeichnet, dass** der vom Abgas der Freikolbenmaschine (2) durchströmte Katalysator (66) mit dem Abgasstrang (70) der Verbrennungskraftmaschine (64) vor dem SCR-Katalysator (74) verbindbar ist.

6. Ammoniakerzeuger nach einem der vorhergehenden Ansprüche, **dadurch gekennzeichnet, dass** die Freikolbenmaschine (2) eingerichtet ist zur Bildung einer "Auxiliary Power Unit" (APU) des Fahrzeugs (62).

7. Ammoniakerzeuger nach einem der vorhergehenden Ansprüche, **dadurch gekennzeichnet, dass** ein Arbeitszylinder (44) der Freikolbenmaschine (2) direkt mit dem Kraftstoff beaufschlagbar ist.

8. Fahrzeug, insbesondere Kraftfahrzeug, mit einer Verbrennungskraftmaschine (64) und einem SCR-Katalysator (74) in einem Abgasstrang (70) der Verbrennungskraftmaschine (64), **gekennzeichnet durch** einen Ammoniakerzeuger nach einem der vorhergehenden Ansprüche.

9. Fahrzeug nach Anspruch 8, **gekennzeichnet durch** einen zwischen dem Arbeitszylinder (44) der Freikolbenmaschine (2) und einer Kraftstoffeinspritzanlage (80) der Verbrennungskraftmaschine (64) angeordneten Druckübersetzer (78).

10. Verfahren, an Bord eines Fahrzeugs mit einer Verbrennungskraftmaschine (64) und einem SCR-Katalysator (74) in einem Abgasstrang (70) der Verbrennungskraftmaschine (64), zur Erzeugung von Ammoniak aus einem Abgas eines Verbrennungsvorgangs zur Verwendung als Reduktionsmittel für die im Abgas der Verbrennungskraftmaschine (64) enthaltenen Stickoxide, **dadurch gekennzeichnet, dass** das Abgas zur Erzeugung von Ammoniak aus einer mit Kraftstoff betriebenen Freikolbenmaschine (2) stammt, wobei die Freikolbenmaschine (2) den Druck eines in die Verbrennungskraftmaschine (64) eingespritzten Kraftstoffs erhöht.

## Claims

1. Ammonia generator for a vehicle having an internal combustion engine (64) and having an SCR catalytic converter (74) in an exhaust section (70) of the internal combustion engine (64), having devices (2, 66, 68) for generating ammonia from an exhaust gas of a combustion process for use as a reducing agent for the nitrogen oxides contained in the exhaust gas of the internal combustion engine (64), **characterized in that** the devices (2, 66, 68) comprise a fuel-operated free-piston machine (2), from the exhaust gas of which the ammonia is generated, with the free-piston machine (2) increasing the pressure of a fuel which is injected into the internal combustion engine (64).

2. Ammonia generator according to Claim 1, **characterized in that** said ammonia generator comprises a catalytic converter (66) which can be traversed by the exhaust gas of the free-piston machine (2).

3. Ammonia generator according to Claim 2, **characterized in that** the catalytic converter is a high-grade metal ammonia catalytic converter (66).

4. Ammonia generator according to Claim 2 or 3, **characterized in that** a device (68) is provided for injecting fuel into the exhaust gas of the free-piston machine (2) before said exhaust gas passes through the catalytic converter (66).

5. Ammonia generator according to Claim 2, 3 or 4, **characterized in that** the catalytic converter (66) which is traversed by the exhaust gas of the free-piston machine (2) can be connected to the exhaust section (70) of the internal combustion engine (64) upstream of the SCR catalytic converter (74).

6. Ammonia generator according to one of the preceding claims, **characterized in that** the free-piston machine (2) is set up so as to form an "auxiliary power unit" (APU) of the vehicle (62).

7. Ammonia generator according to one of the preceding claims, **characterized in that** a working cylinder (44) of the free-piston machine (2) can be acted on directly with the fuel.

8. Vehicle, in particular motor vehicle, having an internal combustion engine (64) and having an SCR catalytic converter (74) in an exhaust section (70) of the internal combustion engine (64), **characterized by** an ammonia generator according to one of the preceding claims.

9. Vehicle according to Claim 8, **characterized by** a pressure booster (78) which is arranged between the working cylinder (44) of the free-piston machine (2) and a fuel-injection system (80) of the internal combustion engine (64).

10. Method for generating ammonia, on board a vehicle having an internal combustion engine (64) and having an SCR catalytic converter (74) in an exhaust section (70) of the internal combustion engine (64), from an exhaust gas of a combustion process for use as reducing agent for the nitrogen oxides contained in the exhaust gas of the internal combustion engine (64), **characterized in that** the exhaust gas for generating ammonia originates from a fuel-operated free-piston machine (2), with the free-piston machine (2) increasing the pressure of a fuel which is injected into the internal combustion engine (64).

## Revendications

1. Générateur d'ammoniac pour un véhicule comprenant un moteur à combustion interne (64) et un catalyseur à RCS (74) dans une ligne d'échappement (70) du moteur à combustion interne (64), comprenant des dispositifs (2, 66, 68) pour produire de l'ammoniac à partir d'un gaz d'échappement provenant d'une opération de combustion, afin de l'utiliser comme agent réducteur pour les oxydes d'azote contenus dans le gaz d'échappement du moteur à combustion interne (64), **caractérisé en ce que** les dispositifs (2, 66, 68) comprennent un moteur à piston libre (2) fonctionnant avec du carburant, dans le gaz d'échappement duquel est produit de l'ammoniac, le moteur à piston libre (2) augmentant la pression d'un carburant injecté dans le moteur à combustion interne (64).

2. Générateur d'ammoniac selon la revendication 1, **caractérisé en ce qu'**il comprend un catalyseur (66) pouvant être parcouru par le gaz d'échappement du moteur à piston libre (2).

3. Générateur d'ammoniac selon la revendication 2, **caractérisé en ce que** le catalyseur est un catalyseur d'ammoniac à métaux nobles (66).

4. Générateur d'ammoniac selon la revendication 2 ou **3, caractérisé en ce qu'**un dispositif (68) pour l'injection de carburant dans le gaz d'échappement du moteur à piston libre (2) est prévu avant le passage du gaz d'échappement à travers le catalyseur (66).

5. Générateur d'ammoniac selon la revendication 2, 3 ou 4, **caractérisé en ce que** le catalyseur (66) parcouru par le gaz d'échappement du moteur à piston libre (2) peut être connecté à la ligne d'échappement (70) du moteur à combustion interne (64) avant le catalyseur à RCS (74).

6. Générateur d'ammoniac selon l'une quelconque des revendications précédentes, **caractérisé en ce que** le moteur à piston libre (2) est prévu pour former une "Unité de Puissance Auxiliaire" (UPA) du véhicule (62).

7. Générateur d'ammoniac selon l'une quelconque des revendications précédentes, **caractérisé en ce qu'**un cylindre de travail (44) du moteur à piston libre (2) peut être directement sollicité par le carburant.

8. Véhicule, en particulier véhicule automobile, comprenant un moteur à combustion interne (64) et un catalyseur à RCS (74) dans une ligne d'échappement (70) du moteur à combustion interne (64), **caractérisé par** un générateur d'ammoniac selon l'une quelconque des revendications précédentes.

9. Véhicule selon la revendication 8, **caractérisé par** un multiplicateur de pression (78) disposé entre le cylindre de travail (44) du moteur à piston libre (2) et une installation d'injection de carburant (80) du moteur à combustion interne (64).

10. Procédé pour produire, à bord d'un véhicule comprenant un moteur à combustion interne (64) et un catalyseur à RCS (74) dans une ligne d'échappement (70) du moteur à combustion interne (64), de l'ammoniac à partir d'un gaz d'échappement provenant d'une opération de combustion pour l'utilisation en tant qu'agent réducteur pour les oxydes d'azote contenus dans le gaz d'échappement du moteur à combustion interne (64), **caractérisé en ce que** le gaz d'échappement pour produire l'ammoniac provient d'un moteur à piston libre (2) fonctionnant avec du carburant, le moteur à piston libre (2) augmentant la pression d'un carburant injecté dans le moteur à combustion interne (64).
